# EUROPÄISCHE PATENTSCHRIFT

(11) **EP 3 280 561 B1**
(45) Veröffentlichungstag und Bekanntmachung des Hinweises auf die Patenterteilung: **01.05.2019**
(21) Anmeldenummer: 16710438.9
(22) Anmeldetag: 18.03.2016
(51) Int. Cl.: B23K 26/12

(54) **VERFAHREN ZUM VAKUUM-LASERSCHWEISSEN EINES WENIGSTENS ZWEITEILIGEN WERKSTÜCKS**
METHOD OF VACCUM LASER WELDING OF AN AT LEAST TWO-PIECES WORKPIECE
PROCÉDÉ DE SOUDAGE À LASER SOUS VACUUM D'UNE PIECE D'AU MOINS DEUX PARTIES

(30) Priorität: 08.04.2015 DE 102015206237
(43) Veröffentlichungstag der Anmeldung: 14.02.2018
(73) Patentinhaber: FELSOMAT GmbH & Co. KG, 75203 Königsbach-Stein (DE)
(72) Erfinder: WITTE, Fabian, 75233 Tiefenbronn (DE); PESCHINA, Jürgen, 75438 Knittlingen (DE)
(74) Vertreter: Kohler Schmid Möbus Patentanwälte
(86) Internationale Anmeldenummer: PCT/EP2016/055903
(87) Internationale Veröffentlichungsnummer: WO 2016/162182

(56) Entgegenhaltungen:
- DE-A1- 2 032 577
- DE-U1-202011 051 331
- GB-A- 2 499 594
- US-A- 4 964 940
- REISGEN U ET AL: "Laserstrahlschweissen unter Vakuum - Ein Vergleich mit dem Elektronenstrahlschweissen", SCHWEISSEN UND SCHNEIDEN, DVS VERLAG, DUSSELDORF, DE, Bd. 62, Nr. 4, 1. April 2010 (2010-04-01), Seiten 208-216, XP001553383, ISSN: 0036-7184

## Beschreibung

Die Erfindung betrifft ein Verfahren zum Laserschweißen eines wenigstens zweiteiligen Werkstücks, wobei
- das Werkstück oder ein Werkstückträger, auf dem das Werkstück angeordnet ist, und eine Schweißbrille relativ aufeinander zu verfahren werden,
- ein ringförmiger Verbindungsbereich zwischen wenigstens zwei Werkstückteilen des Werkstücks von einem Laserstrahl geschweißt wird, und
- das Werkstück oder der Werkstückträger, auf dem das Werkstück angeordnet ist, und die Schweißbrille relativ voneinander weg verfahren werden. Die Erfindung betrifft weiterhin ein System zum Laserschweißen eines wenigstens zweiteiligen Werkstücks.

Ein solches Verfahren und ein zugehöriges System zum Laserschweißen eines zweiteiligen Werkstücks ist beispielsweise aus der DE 20 2011 051 331 U1 bekannt geworden.

Bei der Fertigung von metallischen Strukturen, insbesondere Werkstücken, besteht oftmals die Notwenigkeit, mehrere metallische Teile miteinander zu verschweißen. Verschweißungen bieten sehr robuste und beständige Verbindungen.

Schweißnähte können manuell von einem Werker gesetzt werden, der mit einem Handschweißgerät, etwa mit einer Gasflamme, die zu schweißenden Flächenbereiche erhitzt und die zu verbindenden Teile zusammendrückt. Beim manuellen Schweißen ist jedoch der Flächenbereich, welcher mit dem Handschweißgerät erhitzt wird, meist relativ groß und schwierig zu kontrollieren.

Um Verschweißungen präziser und kontrollierter setzten zu können, ist das Schweißen mittels eines Elektronenstrahls bekannt geworden. Der Elektronenstrahl propagiert dabei von einer Elektronenkanone durch ein Vakuum zu einem zu schweißenden Werkstück. Der Elektronenstrahl kann das Werkstück in einem sehr kleinen Flächenbereich erhitzen.

Für das Elektronenstrahlschweißen wird das Werkstück üblicherweise in eine Vakuumkammer durch eine Tür eingeschleust; es dauert jedoch lange, das vergleichsweise große Volumen der Vakuumkammer nach einem Werkstückwechsel zu evakuieren.

Aus der Firmendruckschrift der pro-beam AG & Co. KGaA, Planegg, DE, mit dem Titel "Elektronenstrahlschweißen Grundlagen einer faszinierenden Technik", Abschnitt 6.2.2 Taktmaschine, ist es bekannt, auf einem Drehhalter zwei Werkstückträger für eine Ladeposition und eine Arbeitsposition einzurichten. In der Arbeitsposition kann ein Werkstückträger mit aufgeladenem Werkstück an das nach unten offene Gehäuse einer Vakuumkammer herangefahren werden, so dass das Gehäuse abgedichtet wird und evakuiert werden kann. Sodann kann das Elektronenstrahlschweißen erfolgen. Bei diesem Aufbau kann die Vakuumkammer relativ klein ausgebildet werden.

Elektronenkanonen für das Elektronenstrahlschweißen sind jedoch teuer und können durch Lufteinbrüche leicht beschädigt werden.

Das Schweißen von Werkstücken kann weiterhin mittels eines Laserstrahls erfolgen. Mittels des Laserstrahls können ebenfalls sehr präzise und gut kontrollierbare Verschweißungen gesetzt werden. Laser sind zudem vergleichsweise robust und kostengünstig.

Aus der DE 20 2011 051 331 U1 ist eine Rundtisch-Werkzeugmaschine mit einer Laserschweißstation bekannt geworden, bei der eine topfförmige Werkstückpalette mit einem zweiteiligen Werkstück mit einer Handhabungsvorrichtung aus einem Rundtisch ausgehoben wird und von unten an eine Aufnahmeöffnung eines Gehäuses herangefahren wird. In dem Gehäuse ist ein Laser angeordnet, und das Gehäuse mitsamt der eingefahrenen Werkstückpalette dichtet einen Laserbearbeitungsraum lichtdicht für das Licht des Lasers ab. Mit dem Laser wird das Werkstück bearbeitet. Im Gehäuse ist eine Schweißbrille angeordnet, die in eine Schweißbrillenkassette integriert ist und das Werkstück abdeckt, um dieses vor Verschmutzungen bei der Laserbearbeitung zu schützen. Zur Abtastung des Werkstücks mit dem Laserstrahl kann die Werkstückpalette mittels der Handhabungsvorrichtung gedreht werden.

### Aufgabe der Erfindung

Der Erfindung liegt die Aufgabe zugrunde, ein Verfahren zur Laserbearbeitung von wenigstens zweiteiligen Werkstücken vorzustellen, mit dem eine qualitativ hochwertige Laserbearbeitung mit kurzen Nebenzeiten erfolgen kann.

### Kurze Beschreibung der Erfindung

Diese Aufgabe wird gelöst durch ein Verfahren zum Vakuum-Laserschweißen eines wenigstens zweiteiligen Werkstücks,
mit folgenden Schritten:
a) das Werkstück oder ein Werkstückträger, auf dem das Werkstück angeordnet ist, und eine Schweißbrille werden relativ aufeinander zu verfahren und aneinander angepresst, so dass von dem Werkstück und/oder dem Werkstückträger, der Schweißbrille und einer Schweißbrillenaufnahme, in der die Schweißbrille drehbar gelagert ist, eine Schweißkammer umschlossen und gasdicht abgedichtet wird;
b) die Schweißkammer wird evakuiert;
c) ein ringförmiger Verbindungsbereich zwischen wenigstens zwei Werkstückteilen des Werkstücks, der dem Vakuum in der Schweißkammer ausgesetzt ist, wird von einem Laserstrahl geschweißt, wobei der Laserstrahl durch die Schweißkammer propagiert, und wobei das Werkstück oder der Werkstückträger mitsamt dem Werkstück und die Schweißbrille relativ zur Schweißbrillenaufnahme gedreht werden;
d) die Schweißkammer wird belüftet;
e) das Werkstück oder der Werkstückträger, auf dem das Werkstück angeordnet ist, und die Schweißbrille werden relativ voneinander weg verfahren.

Mit dem erfindungsgemäßen Verfahren ist es möglich, in der Umgebung eines ringförmigen Verbindungsbereichs zweier Teile eines Werkstücks, der geschweißt werden soll, auf einfache und schnelle Weise ein Vakuum einzurichten. Dazu wird durch das Werkstück und/oder den Werkstückträger, weiterhin durch die Schweißbrille und eine Schweißbrillenaufnahme eine Schweißkammer eingerichtet. Deren Abdichtung erfolgt durch das Heranfahren des Werkstücks oder Werkstückträgers an die Schweißbrille. Mit dieser Geometrie benötigt die Schweißkammer nur sehr geringen Raum, der schnell evakuierbar ist.

Im Vakuum (bevorzugt bei maximal 100 mbar, meist im Niederdruckbereich um 10 mbar herum) kann das Laserschweißen mit hoher Qualität erfolgen. Zum einen werden beim Vakuumschweißen nur wenig Schweißperlen und Spritzer von Metall erzeugt; es entsteht kaum Ruß. Zum anderen können Oxidationsprozesse an der Schweißnaht vermieden oder zumindest begrenzt werden.

Erfindungsgemäß ist die Schweißbrille in einer Schweißbrillenaufnahme drehbar gelagert. Dadurch kann die Schweißbrille sich zusammen mit dem angelegten Werkstück oder der angelegten Werkstückaufnahme mit drehen. Dies erleichtert die Abdichtung zwischen Schweißbrille einerseits und angelegtem Werkstück oder angelegter Werkstückaufnahme andererseits erheblich, da es während der Drehbewegung keine Relativbewegung dieser Bauteile gibt. Weiterhin ist die Abdichtung der Schweißbrille in der Schweißbrillenaufnahme während der Drehbewegung ebenfalls relativ einfach einzurichten, da die Schweißbrille ständig in der Schweißbrillenaufnahme gehalten bleiben kann.

Die Schweißbrille schützt das Werkstück und/oder das Innere der Schweißkammer und/oder die Umgebung vor Verschmutzungen durch das Laserschweißen. Die Schweißbrillenaufnahme ist meist stationär ausgebildet (verfährt und dreht sich also für die Werkstückbearbeitung nicht). Das Werkstück besteht zumindest teilweise, und bevorzugt vollständig, aus Metall, insbesondere Stahl. Typische Werkstücke, die im Rahmen des Verfahrens verschweißt werden, sind verzahnte Werkstücke wie Zahnräder und Getriebe.

### Bevorzugte Varianten der Erfindung

Bei einer vorteilhaften Variante des erfindungsgemäßen Verfahrens ist an der Schweißbrillenaufnahme ein Einkoppelfenster ausgebildet, durch das in Schritt c) der Laserstrahl in die Schweißkammer eingekoppelt wird. Der Laserstrahl kann dann entfernt von der Schweißbrillenaufnahme erzeugt werden, und die Schweißkammer kann besonders kompakt ausgebildet werden.

Bevorzugt ist eine Variante, bei der die Schweißbrillenaufnahme während des gesamten Verfahrens ortsfest ist, und in Schritt a) das Werkstück oder der Werkstückträger an die Schweißbrille heran gefahren wird, und in Schritt e) das Werkstück oder der Werkstückträger von der Schweißbrille weg gefahren wird. Dies erleichtert den Zugang zur Schweißkammer über die Schweißbrillenaufnahme, insbesondere bezüglich der Einkoppelung eines Laserstrahls und des Evakuierens der Schweißkammer. Zudem kann die Beweglichkeit des Werkstücks oder Werkstückträgers auch für den Werkstücktausch genutzt werden.

Eine vorteilhafte Weiterentwicklung dieser Variante sieht vor, dass vor Schritt a) das Werkstück oder der Werkstückträger mittels eines mobilen Tischs, insbesondere Rundtischs, unter die Schweißbrillenaufnahme verfahren wird, und während Schritt a) das Werkstück oder der Werkstückträger aus dem mobilen Tisch ausgehoben wird, und dass während Schritt e) das Werkstück oder der Werkstückträger auf dem mobilen Tisch abgelegt wird, und nach Schritt e) das Werkstück oder der Werkstückträger mittels des mobilen Tischs von der Schweißbrillenaufnahme weg verfahren wird. Der mobile Tisch, insbesondere Rundtisch, ermöglicht einen schnellen Austausch des zu schweißenden Werkstücks. Das Ausheben kann durch eine eigene (vom mobilen Tisch unabhängige) Handhabungsvorrichtung erfolgen, was den baulichen Aufwand reduziert. Zudem kann durch das Ausheben eine Positionierungs-Ungenauigkeit des mobilen Tisches kompensiert werden. Vorteilhaft ist auch eine Variante, bei der während Schritt c) an der Schweißkammer ständig gesaugt wird, insbesondere mit einer konstanten Pumpleistung, und ständig Gas in die Schweißkammer eingelassen wird, insbesondere mit einem konstanten Gasstrom. Durch dieses Vorgehen kann ein definierter Gasdruck, der für die gewünschte Laserbearbeitung besonders geeignet ist, eingestellt werden. Durch einen (schwachen) Gasstrom in der Schweißkammer können Verschmutzungen von der Schweißstelle (vom Laserauftreffpunkt) weg transportiert und Ablagerungen in der Schweißkammer reduziert werden. Das Gas kann beispielsweise Stickstoff oder ein Edelgas sein; bei manchen Anwendungen kommt als Gas auch atmosphärische Luft in Betracht. Bevorzugt wird in der Schweißkammer während Schritt c) ein konstanter Druck gehalten, meist um 5-20 mbar. Falls nötig, kann dafür der Gasdruck in der Schweißkammer laufend gemessen und der eingelassene Gasfluss geregelt werden; meist reicht aber ein fest eingestellter, eingelassener Gasfluss aus.

Bei einer vorteilhaften Weiterentwicklung dieser Variante ist vorgesehen, dass in der Schweißbrillenaufnahme ein im Wesentlichen gerader Laserkanal ausgebildet ist, in welchem in Schritt c) der Laserstrahl propagiert und welcher sich auf einen Auftreffpunkt des Laserstrahls am Verbindungsbereich zu verengt, wobei in Schritt c) in einem vom Verbindungsbereich entfernten Abschnitt des Laserkanals das Gas eingelassen wird, und dass in der Schweißbrillenaufnahme ein im Wesentlichen gerader Saugkanal ausgebildet ist, welcher zumindest näherungsweise auf den Auftreffpunkt des Laserstrahls ausgerichtet ist, insbesondere wobei der Saugkanal sich vom Auftreffpunkt weg erweitert, und wobei in Schritt c) an einem vom Verbindungsbereich abgewandten Ende des Saugkanals abgepumpt wird. Dadurch kann ein schwacher, gleichmäßiger (laminarer) Gasstrom über dem Auftreffpunkt des Laserstrahls eingerichtet werden, wodurch die Qualität der Werkstückbearbeitung verbessert wird. Der sich verengende Laserkanal und gegebenenfalls auch der sich erweiternde Saugkanal erzeugen dabei einen Düseneffekt, durch den die Gasatome oder Gasmoleküle im Bereich des Laserauftreffpunkts besonders schnell strömen. Der nahe dem Laserauftreffpunkt verengte Laserkanal minimiert auch eine Verschmutzung des Laserkanals, und insbesondere eines Einkoppelfensters am Ende des Laserkanals.

### Erfindungsgemäßes System zum Laserschweißen

In den Rahmen der vorliegenden Erfindung fällt auch ein System zum Laserschweißen eines wenigstens zweiteiligen Werkstücks, umfassend
- das Werkstück oder einen Werkstückträger für das Werkstück,
- eine Schweißbrillenaufnahme, und
- eine Schweißbrille mit einem Widerlager für das Werkstück und/oder den Werkstückträger,
das dadurch gekennzeichnet ist,
dass die Schweißbrille an der Schweißbrillenaufnahme drehbar um eine Drehachse DA gelagert ist,
dass eine erste, umlaufende Dichtung an der Schweißbrille oder Schweißbrillenaufnahme angeordnet ist,
und eine zweite, umlaufende Dichtung an der Schweißbrille oder am Werkstückträger angeordnet ist,
so dass bei am Widerlager der Schweißbrille anliegendem Werkstück und/oder Werkstückträger eine gasdichte Schweißkammer ausgebildet ist, die durch die Schweißbrille, die Schweißbrillenaufnahme und das Werkstück und/oder den Werkstückträger begrenzt ist,
wobei die erste Dichtung die Schweißbrillenaufnahme gegenüber der Schweißbrille abdichtet, und die zweite Dichtung die Schweißbrille gegenüber dem Werkstück und/oder dem Werkstückträger abdichtet,
und dass in der Schweißbrillenaufnahme einen Saugkanal ausgebildet ist, über den die Schweißkammer evakuierbar ist. Mit diesem System kann eine kompakte und damit schnell evakuierbare Schweißkammer auf einfache Weise eingerichtet werden. Durch die Drehbarkeit der Schweißbrille in der Schweißbrillenaufnahme kann das anliegende Werkstück oder der anliegende Werkstückträger mitsamt der Schweißbrille für das Abfahren einer Schweißnaht am Werkstück gegenüber der Schweißbrillenaufnahme gedreht werden, was die Abdichtung der Schweißkammer durch die erste und zweite Dichtung erleichtert. Unter Vakuum können qualitativ besonders hochwertige Schweißnähte gefertigt werden. Das erfindungsgemäße System ist insbesondere für die Durchführung des oben beschriebenen erfindungsgemäßen Verfahrens oder eine seiner Varianten eingerichtet.

Bei einer vorteilhaften Ausführungsform des erfindungsgemäßen Systems ist weiterhin eine Vakuumpumpe vorhanden, welche an den Saugkanal angeschlossen ist. Durch die Vakuumpumpe kann nach dem Anlegen des Werkstücks und/oder Werkstückträgers an das Widerlager die Schweißkammer evakuiert werden, und falls gewünscht auch während der Laserbearbeitung am Werkstück weiter gepumpt werden, insbesondere um einen (schwachen) Gasstrom über einen Laserauftreffpunkt am Werkstück einzurichten.

Vorteilhafter Weise ist bei einer Ausführungsform ein Entlüftungsventil vorhanden, mit dem die Schweißkammer belüftbar ist, insbesondere wobei das Entlüftungsventil an einer am Saugkanal angeschlossenen Verbindungsleitung zu einer Vakuumpumpe angeordnet ist. Mit dem Entlüftungsventil kann einfach und schnell nach der Laserbearbeitung der Umgebungsdruck (meist ca. 1 bar) in der Schweißkammer hergestellt werden, um ein Zurückziehen des Werkstücks oder Werkstückträgers vom Widerlager zu ermöglichen.

Bei einer vorteilhaften Ausführungsform ist vorgesehen,
dass an der Schweißbrillenaufnahme ein entlang der Drehachse DA verfahrbarer Schlitten ausgebildet ist, der durch Federkraft in eine von der übrigen Schweißbrillenaufnahme weg verfahrene Position vorgespannt ist, dass am Schlitten ein Anlageelement zur Anlage am Werkstück angeordnet ist, wobei das Anlageelement drehbar um die Drehachse DA am Schlitten gelagert ist, und dass am Anlageelement eine dritte, umlaufende Dichtung angeordnet ist, mit der bei am Anlageelement anliegendem Werkstück eine Bohrung des Werkstücks abdichtbar ist. Dadurch ist es möglich, auch bei einem Werkstück mit Bohrung eine besonders kompakte Schweißkammer einzurichten. Die Abdichtung der Bohrung erfolgt über den Schlitten an einem der Schweißbrillenaufnahme zugewandten Ende der Bohrung, so dass nicht das ganze Werkstück in die Schweißkammer aufgenommen zu werden braucht. Der Schlitten und das Anlageelement, die als Teil der Schweißbrillenaufnahme angesehen werden können, sind in der Schweißkammer verfahrbar bzw. begrenzen diese mit.

Vorteilhaft ist auch eine weitere Ausführungsform, bei der an der Schweißbrillenaufnahme ein Einkoppelfenster für einen Laserstrahl ausgebildet ist, insbesondere an einem äußeren Ende einer Einkoppelfensteraufnahme, die von der übrigen Schweißbrillenaufnahme absteht. Vor dem Einkoppelfenster ist typischerweise das vordere Ende einer Lichtleitfaser angeordnet, die den Laserstrahl eines am hinteren Ende der Lichtleitfaser angeschlossenen Lasers über eine Schweißoptik in das Einkoppelfenster einstrahlt. Der Laser ist bevorzugt ein Festkörperlaser (Diodenlaser).

Bei einer bevorzugten Ausführungsform ist vorgesehen, dass in der Schweißbriiienaufnahme ein im Wesentlichen gerader Laserkanal für die Propagation eines Laserstrahls ausgebildet ist, wobei der Laserkanal sich auf das zu schweißende Werkstück zu verengt, dass an einem dem zu schweißenden Werkstück abgewandten Abschnitt des Laserkanals ein Einlass für ein Gas eingerichtet ist, dass der Saugkanal zumindest näherungsweise auf einen Auftreffpunkt des Laserstrahls am zu schweißenden Werkstück ausgerichtet ist, und weiterhin der Laserkanal auf den Auftreffpunkt des Laserstrahls am zu schweißenden Werkstück ausgerichtet ist, und dass der Saugkanal im Wesentlichen gerade ausgebildet ist, insbesondere wobei der Saugkanal sich vom zu schweißenden Werkstück weg erweitert. Dadurch kann ein schwacher, gleichmäßiger (laminarer) Gasstrom über dem Auftreffpunkt des Laserstrahls eingerichtet werden, wodurch die Qualität der Werkstückbearbeitung verbessert wird. Der sich verengende Laserkanal und gegebenenfalls auch der sich erweiternde Saugkanal erzeugen dabei einen Düseneffekt, durch den die Gasatome oder Gasmoleküle im Bereich des Laserauftreffpunkts besonders schnell strömen. Der nahe dem Laserauftreffpunkt verengte Laserkanal minimiert auch eine Verschmutzung des Laserkanals, und insbesondere eines Einkoppelfensters am Ende des Laserkanals.

Vorteilhaft ist eine Weiterbildung dieser Ausführungsform, bei der der Saugkanal und der Laserkanal mit ihren dem Auftreffpunkt des Laserstrahls zugewandten Enden in einen Hauptraum der Schweißkammer münden, wobei die Enden einen Mittenabstand kleiner oder gleich 2/3 des Innendurchmessers, bevorzugt kleiner oder gleich 1/2 des Innendurchmessers, des Hauptraums aufweisen. Dadurch, dass die Enden von Laserkanal und Saugkanal relativ nah benachbart sind, wird der Gasstrom auf einen engen Raum begrenzt, wodurch die Strömungsgeschwindigkeit der Gasatome oder Gasmoleküle hoch gehalten wird, und ein besonders guter Abtransport von Verunreinigungen von der Schweißnaht stattfinden kann.

Besonders bevorzugt ist eine Ausführungsform, bei der das Volumen der Schweißkammer 5 Liter oder weniger, bevorzugt 3 Liter oder weniger, und insbesondere zwischen 0,2 l und 2,5 l beträgt. Eine Schweißkammer mit einem solchen Volumen lässt sich nach einem Werkstückwechsel besonders schnell evakuieren bzw. auf den für die Laserbearbeitung gewünschten Druck abpumpen.

Vorteilhaft ist auch eine Ausführungsform, bei der die Schweißbrille mit einer ringförmigen Wand ausgebildet ist, wobei eine erste stirnseitige Öffnung von der Schweißbrillenaufnahme abgedeckt wird, und eine zweite stirnseitige Öffnung, die durch das Widerlager begrenzt wird, vom Werkstück und/oder vom Werkstückträger abdeckbar ist. Diese Geometrie eignet sich besonders gut zur drehbaren Lagerung der Schweißbrille in der Schweißbrillenaufnahme und zur Ausbildung einer gasdichten bzw. vakuumdichten Schweißkammer. Das Werkstück kann gut in den Höhenbereich der ringförmigen Wand hineinragen.

In den Rahmen der vorliegenden Erfindung fällt weiterhin die Verwendung eines erfindungsgemäßen, oben beschriebenen Systems in einem erfindungsgemäßen, oben beschriebenen Verfahren.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine schematische Darstellung einer ersten Ausführungsform eines erfindungsgemäßen Systems zum Laserschweißen, wobei ein Werksstück axial geschweißt wird und das Werkstück die Schweißkammer mit abdichtet, im Querschnitt;
- Fig. 1b: das System von Fig. 1a, in einer schematischen, geschnittenen Perspektivansicht;
- Fig. 1c: das System von Fig. 1a, im schematischen Querschnitt, mit zurückgezogenem Werkstück;
- Fig. 2a: eine schematische Darstellung einer zweiten Ausführungsform eines erfindungsgemäßen Systems zum Laserschweißen, wobei ein Werksstück axial geschweißt wird und ein Werkstückträger die Schweißkammer mit abdichtet;
- Fig. 2b: das System von Fig. 2a, in einer schematischen, geschnittenen Perspektivansicht;
- Fig. 2c: das System von Fig. 2a, im schematischen Querschnitt, mit zurückgezogenem Werkstückträger;
- Fig. 3a: eine schematische Darstellung einer dritten Ausführungsform eines erfindungsgemäßen Systems zum Laserschweißen, wobei ein Werksstück radial geschweißt wird und ein Werkstückträger die Schweißkammer mit abdichtet;
- Fig. 3b: das System von Fig. 3a, in einer schematischen, geschnittenen Perspektivansicht;
- Fig. 3c: das System von Fig. 3a, im schematischen Querschnitt, mit zurückgezogenem Werkstückträger;
- Fig. 4a-4f: eine schematische Darstellung des Ablaufs einer beispielhaften Variante des erfindungsgemäßen Verfahrens zum Vakuum-Laserschweißen eines Werkstücks.

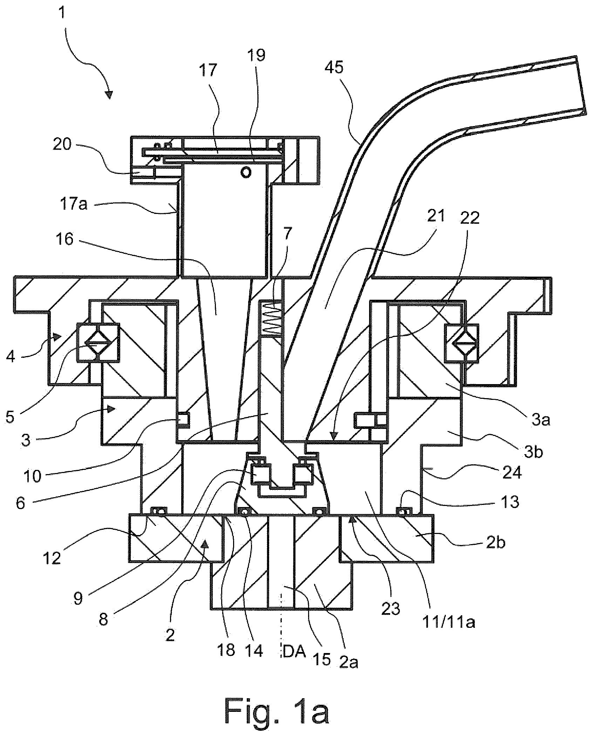

Die Figuren 1a bis 1c illustrieren eine erste Ausführungsform eines erfindungsgemäßen Systems 1 zum Laserschweißen eines mehrteiligen Werkstücks 2.

Wie insbesondere aus Fig. 1a ersichtlich, umfasst das System 1 in dieser Ausführungsform ein zweiteiliges Werkstück 2, mit einem inneren, gebohrten Teilstück 2a und einem äußeren, ringförmigen Teilstück 2b, weiterhin eine Schweißbrille 3 und eine Schweißbrillenaufnahme 4.

Die Schweißbrille 3 ist an einem oberen Teil 3a über ein Lager 5 drehbar um eine Drehachse DA in der Schweißbrillenaufnahme 4 gelagert. An der Schweißbrillenaufnahme 4 ist an einem inneren, nach unten ragenden Teil außenseitlich eine erste, umlaufende Dichtung 10 ausgebildet, die zwischen der Schweißbrillenaufnahme 4 und der Schweißbrille 3 an einem unteren Teil 3b auch bei Drehung der Schweißbrille 3 gasdicht abdichtet. Der obere und untere Teil 3a, 3b der Schweißbrille 3 sind dauerhaft fest miteinander verbunden.

An der Schweißbrillenaufnahme 4 ist weiterhin ein Schlitten 6 ausgebildet, der entlang der Drehachse DA in der übrigen Schweißbrillenaufnahme 4 verfahrbar ist. Der Schlitten 6 wird durch eine Feder 7 in eine in Fig. 1a nach unten ausgefahrene Stellung vorgespannt. Am Schlitten 6 ist ein Anlageelement 8 über ein weiteres Lager 9 befestigt, wobei das Anlageelement 8 am Schlitten 6 wiederum drehbar um die Drehachse DA ist.

An einer Unterseite der Schweißbrille 3 ist ein Widerlager 12 für eine Anlage des Werkstücks 2 ausgebildet. Am Widerlager 12 ist eine zweite, umlaufende Dichtung 13 ausgebildet, die zwischen dem Werkstück 2 und der Schweißbrille 3 gasdicht abdichtet.

Weiterhin ist an einer Unterseite des Anlageelements 8 eine dritte, umlaufende Dichtung 14 ausgebildet, die zwischen dem Werkstück 2 im Bereich um dessen Bohrung 15 herum und dem Anlageelement 8 gasdicht abdichtet.

Durch das Werkstück 2, die Schweißbrille 3 und die Schweißbrillenaufnahme 4 wird eine Schweißkammer 11 begrenzt. Die Schweißbrillenaufnahme 4 übergreift dabei eine obere, erste stirnseitige Öffnung 22 einer radialen Wand 24 der Schweißbrille 3, und das Werkstück 2 übergreift eine untere, zweite stirnseitige Öffnung 23 der radialen Wand 24.

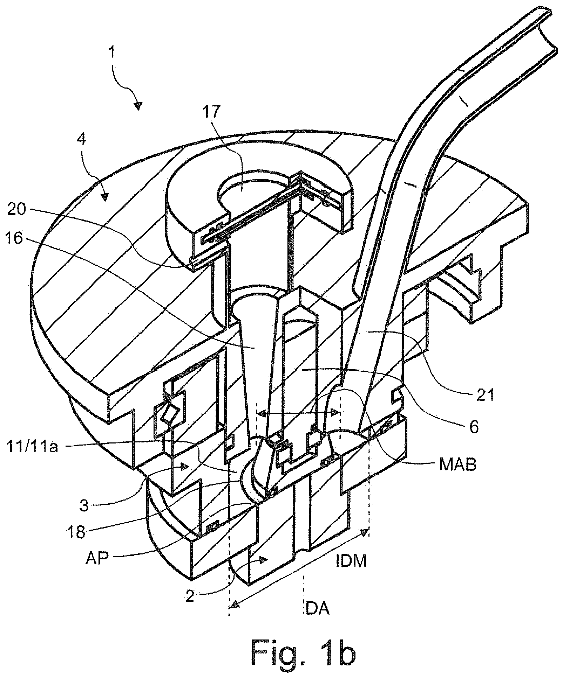

In diese Schweißkammer 11 führt durch die Schweißbrillenaufnahme 4 ein im Wesentlichen gerader Laserkanal 16, der sich in seinem unteren Teil nach unten hin verengt. Der Laserkanal 16 verläuft in der gezeigten Ausführungsform in einem oberen Teil in einer Einkoppelfensteraufnahme 17a, die nach oben von der übrigen Schweißbrillenaufnahme 4 absteht, und endet oben an einem Einkoppelfenster 17. Durch das Einkoppelfenster 17 kann ein Laserstrahl hier parallel zur Drehachse DA in den Laserkanal 16 eingestrahlt werden, um damit einen ringförmigen Verbindungsbereich 18 (vgl. dazu auch Fig. 1b) der beiden Werkstückteile 2a, 2b zu verschweißen. Am Einkoppelfenster 17 ist hier auf der dem Laserkanal 16 zugewandten Seite ein Schutzglas 19 vorgesehen, das bei Verschmutzung leicht austauschbar ist. Weiterhin ist ein Einlass (Spülgaseinlass) 20 im Bereich des oberen Endes des Laserkanals 16 vorgesehen, durch den hier Stickstoff aus einem (nicht näher dargestellten) Vorratsgefäß, etwa einer Druckgasflasche, mit einem schwachen, konstanten Strom in den Laserkanal 16 gelangen kann.

In die Schweißkammer 11 führt durch die Schweißbrillenaufnahme 4 weiterhin ein Saugkanal 21, über den die Schweißkammer 11 evakuiert werden kann, etwa mit einer Drehschieberpumpe (nicht dargestellt), die über eine bevorzugt flexible Verbindungsleitung 45 angeschlossen ist.

Der Laserkanal 16 und der Saugkanal 21 verlaufen in einem schweißkammernahen, unteren Teil gerade und sind beide auf einen Auftreffpunkt AP (gepunktet umrissen) des Laserstrahls auf der Oberfläche des Werkstücks 2, nämlich auf einen Ort auf dem der ringförmigen Verbindungsbereich 18 gerichtet, vgl. insbesondere **Fig. 1b****.**

Die Mündungen von Laserkanal 16 und Saugkanal 21 in den (im Wesentlichen durch die Schweißbrille 3 radial begrenzten) Hauptraum 11a der Schweißkammer 11 weisen einen Mittenabstand MAB auf, der hier ca. 1/2 des Innendurchmessers IDM des Hauptraums 11a beträgt, gemessen in einer Ebene senkrecht zur Drehachse DA.

Man beachte, dass die Schnittebene in Fig. 1b bezüglich der Schweißbrillenaufnahme 4 gestuft ist, so dass die Schweißbrillenaufnahme 4 im rechten Teil der Darstellung gegenüber der Schweißbrille 3 und dem Werkstück 2 hervortritt.

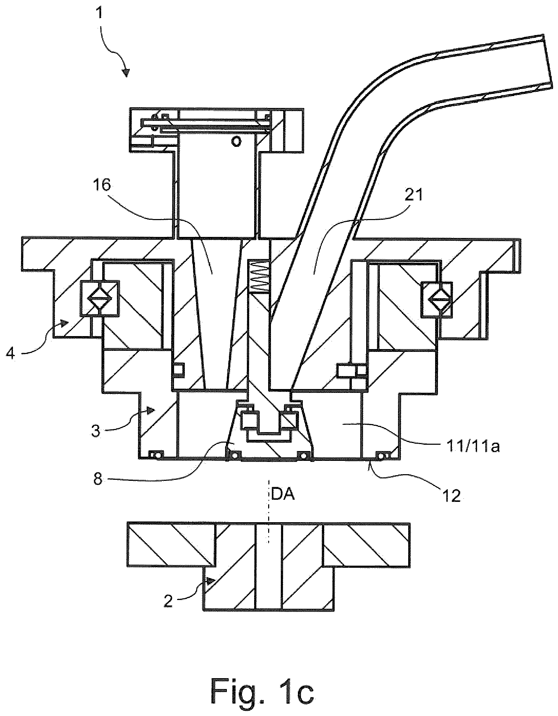

Für die Laserbearbeitung des Werkstücks 2 wird dieses aus einer beabstandeten Position, die in **Fig. 1c** gezeigt ist, an die Schweißbrille 3 herangefahren, um die Schweißkammer 11 abzudichten. Bei noch nicht herangefahrenem Werkstück 2 ist auch erkennbar, dass das Anlageelement 8 wegen der ausgefahrenen Position des Schlittens 6 geringfügig gegenüber dem Widerlager 12 hervorsteht.

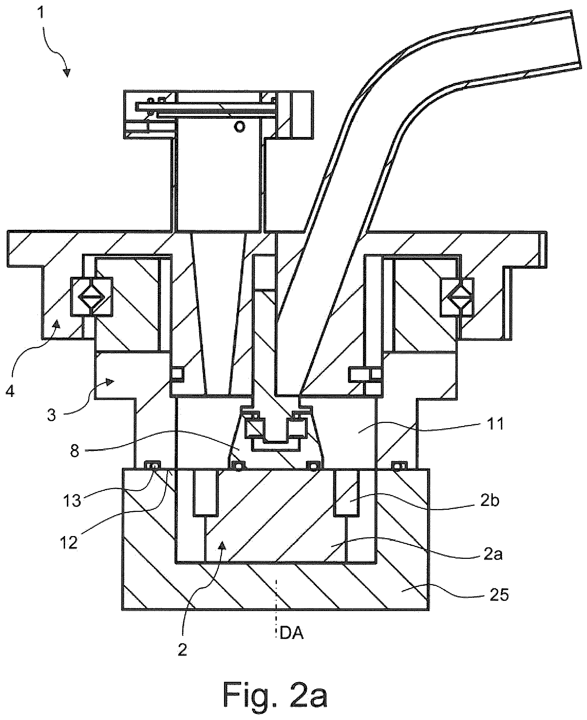

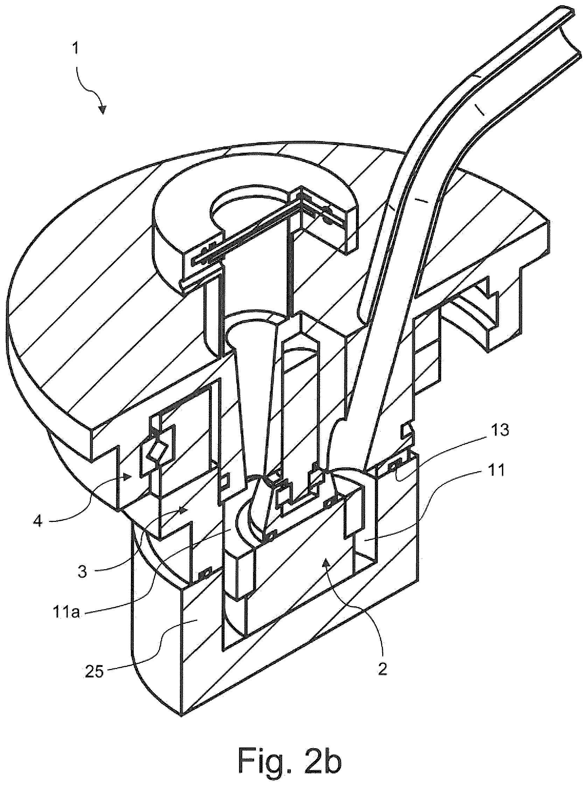

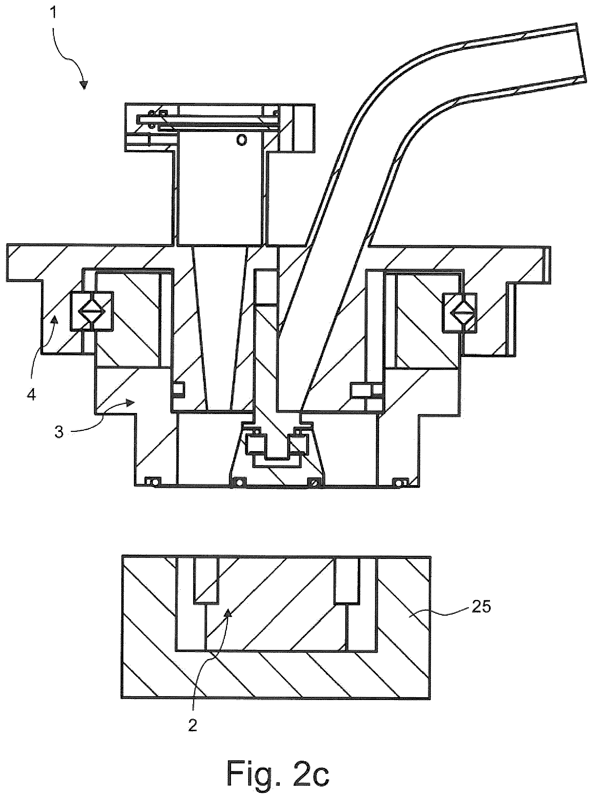

Die **Figuren 2a bis 2c** zeigen eine zweite Ausführungsform eines erfindungsgemäßen Systems 1 zum Laserschweißen, ähnlich der ersten Ausführungsform von Fig. 1a bis 1c. Im Folgenden werden nur die wesentlichen Unterschiede erläutert.

Das zweiteilige Werkstück 2, mit dem inneren Werkstückteil 2a und dem äußeren Werkstückteil 2b, ist hier auf einem näherungsweise topfförmigen Werkstückträger 25 angeordnet und in nicht näher dargestellter Weise auf dem Werkstückträger 25 gesichert. Um die Schweißkammer 11 zu schließen, verfährt der Werkstückträger 25 gegen das Widerlager 12 der Schweißbrille 3, so dass die zweite, umlaufende Dichtung 13 hier zwischen dem Werkstückträger 25 und der Schweißbrille 3 abdichtet. Für die Werkstückbearbeitung dreht sich der Werkstückträger 25 mit dem Werkstück 2 und der Schweißbrille 3 bezüglich der Drehachse DA gegenüber der stationären Schweißbrillenaufnahme 4. Man beachte, dass ein gegenseitiger Eingriff von Werkstückträger 25 und Schweißbrille 3 eingerichtet werden kann, um sicherzustellen, dass sich die Schweißbrille 3 zusammen mit dem Werkstückträger 25 dreht; meist ist aber eine Kraftschluss durch Anlegen ausreichend.

In der gezeigten, zweiten Ausführungsform ist das Werkstück 2 nicht gebohrt; das Anlageelement 8 dient hier nur der zusätzlichen Sicherung des Werkstücks 2 auf dem Werkstückträger 25. Aufgrund der Umschließung durch den Werkstückträger 25 können hier jedoch auch Werkstücke 2 mit Kanälen, Nuten, Vorsprüngen und Schrägflächen aller Art problemlos bearbeitet werden.

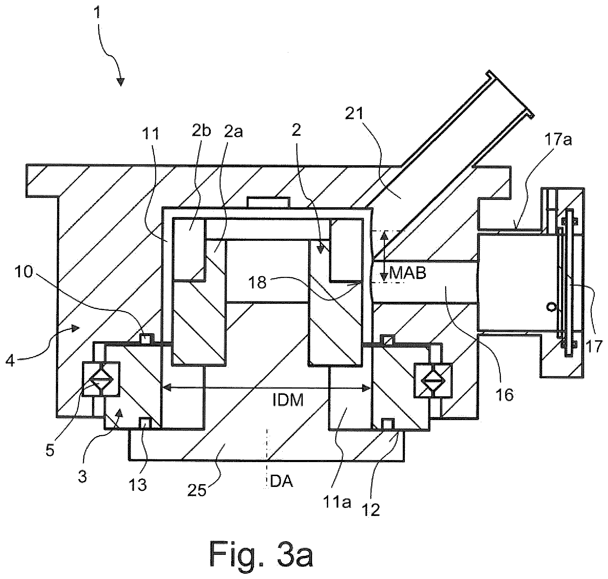

Die **Figuren 3a bis 3c** zeigen eine dritte Ausführungsform eines erfindungsgemäßen Systems 1 zum Laserschweißen, ähnlich der ersten Ausführungsform von Fig. 1a bis 1c. Im Folgenden werden nur die wesentlichen Unterschiede erläutert.

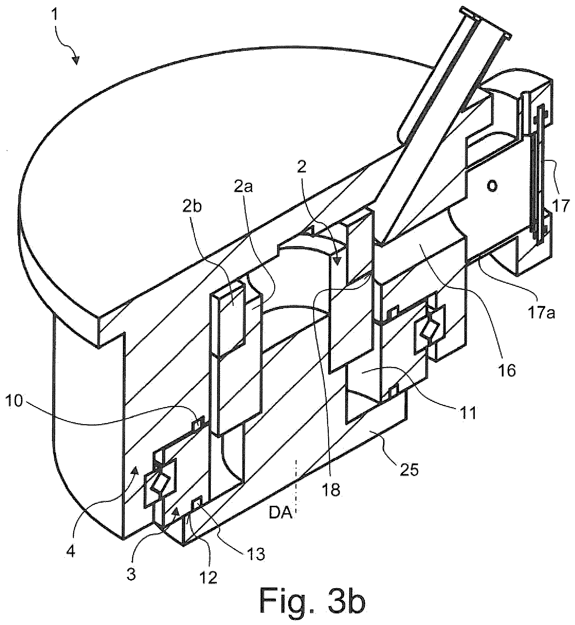

In dieser Ausführungsform wird das zweiteilige Werkstück 2, mit dem inneren, gebohrten Werkstückteil 2a und dem äußeren Werkstückteil 2b, wiederum auf einem Werkstückträger 25 gehalten, vgl. insbesondere **Fig. 3a** und **Fig. 3b****.** Die Schweißbrille 3, die um die Drehachse DA drehbar in der Schweißbrillenaufnahme 4 gelagert ist, bildet ein Widerlager 12 aus, und die zweite umlaufende Dichtung 13 dichtet den Werkstückträger 25 gegen die Schweißbrille 3 ab.

Der Laserkanal 16 verläuft hier senkrecht zur Drehachse DA, so dass eine radial außen am Werkstück 2 verlaufender, umlaufender Verbindungsgereich 18 mit einem durch das Einkoppelfenster 17 eingekoppelten und im Laserkanal 16 propagierenden Laserstrahl (nicht dargestellt) das Werkstück 2 verschweißt werden kann. Die Einkoppelfensteraufnahme 17a steht hier seitlich von der Schweißbrillenaufnahme 4 ab.

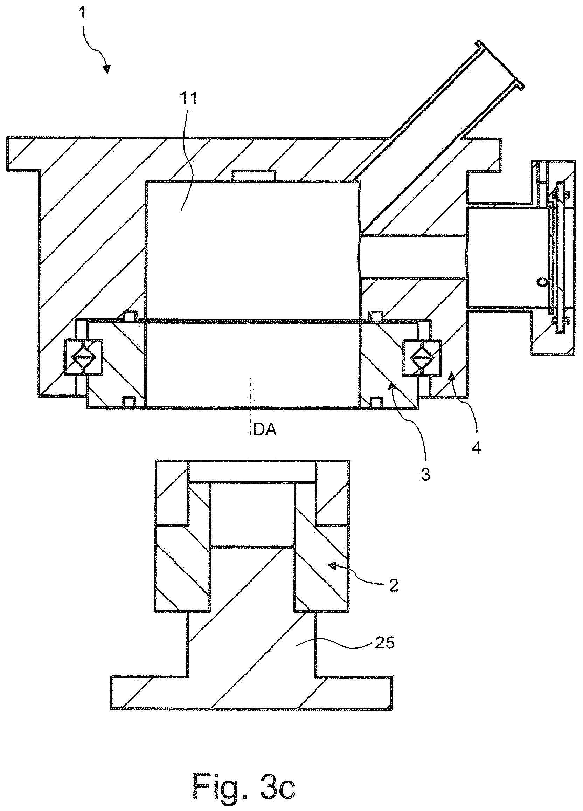

Der Werkstückträger 25 wird parallel zur Drehachse DA an die Schweißbrille 3 herangefahren, um die Schweißkammer 11 zu verschließen, vgl. **Fig. 3c** mit der auseinander gefahrenen Position.

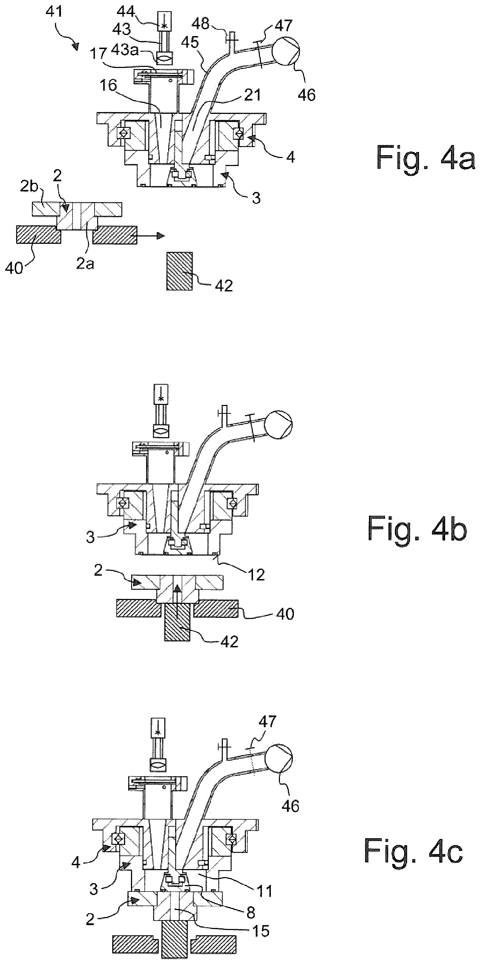

Die **Figuren 4a-4f** illustrieren den Ablauf einer beispielhaften Variante des erfindungsgemäßen Verfahrens zum Vakuum-Laserschweißen eines wenigstens zweiteiligen Werkstücks 2. Das Verfahren läuft hier auf dem in Fig. 1a-1c dargestellten System ab.

Wie aus **Fig. 4a** ersichtlich, ist ein zweiteiliges Werkstück 2, mit einem inneren, gebohrten Werkstückteil 2a und einem äußeren Werkstückteil 2b, auf einem mobilen Tisch 40, etwa einem Rundtisch, angeordnet. Der mobile Tisch 40 verfährt das Werkstück 2 vorbereitend zu einer Laserschweißstation 41, umfassend die hier stationäre Schweißbrillenaufnahme 4 mit der darin drehbar gelagerten Schweißbrille 3 und eine Handhabungsvorrichtung (Hebevorrichtung) 42.

Am Einkoppelfenster 17 der Schweißbrillenaufnahme 4 ist über eine Schweißoptik 43a und eine Lichtleitfaser (Lichtwellenleiter) 43 ein Laser 44 angeschlossen, mit dem ein Laserstrahl in den Laserkanal 16 eingestrahlt werden kann; die Schweißoptik 43a, die ein vorderes (der Laserschweißstation 41 zugewandtes) Ende der Lichtleitfaser 43 abbildet, ist dabei typischerweise geringfügig vom Einkoppelfenster 17 beabstandet. Im in Fig. 4a gezeigten Verfahrensstadium ist der Laserstrahl jedoch noch nicht aktiviert. Am Saugkanal 21 ist eine Verbindungsleitung 45 zu einer Vakuumpumpe 46 angeschlossen; ein Absperrventil 47 in der Verbindungsleitung 45 ist im Verfahrensstadium von Fig. 4a jedoch noch geschlossen. An der Verbindungsleitung 45 ist weiterhin ein Entlüftungsventil (Belüftungsventil) 48 ausgebildet, das im gezeigten Verfahrensstadium ebenfalls geschlossen ist.

Nachdem das Werkstück 2 mittels des mobilen Tischs 40 unter der Schweißbrille 3 positioniert ist, wird das Werkstück 2 mittels der Handhabungsvorrichtung 42 ausgehoben und von unten an das Widerlager 12 der Schweißbrille 3 herangefahren, vgl. **Fig. 4b****.** Die Hebevorrichtung 42 durchgreift dazu in der gezeigten Variante einen Durchbruch im mobilen Tisch 40.

Dadurch wird die Schweißkammer 11 geschlossen, die hier von dem Werkstück 2, der Schweißbrille 3 und der Schweißbrillenaufnahme 4 begrenzt wird, vgl. **Fig. 4c****.** Über das Anlageelement 8 wird dabei auch die Bohrung 15 des Werkstücks 2 verschlossen. Sodann kann mit dem Evakuieren der Schweißkammer 11 begonnen werden. Hierfür wird das Absperrventil 47 geöffnet (vgl. gepunktete Darstellung), das zur Vakuumpumpe 46 führt.

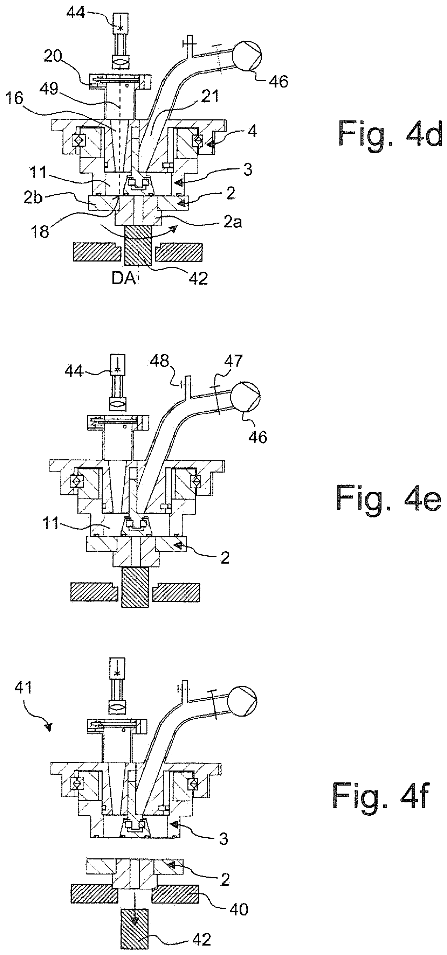

Sobald der Druck in der Schweißkammer 11 auf das gewünschte Druckniveau abgesunken ist, wird mit der Schweißbearbeitung begonnen, vgl. **Fig. 4d****.** Der Laser 44 erzeugt einen Laserstrahl 49, der durch den Laserkanal 16 auf einen Punkt auf dem ringförmigen Verbindungsbereich 18 der beiden Werkstückteile 2a, 2b gerichtet ist. Die Handhabungsvorrichtung 42 wird um die Drehachse DA gedreht, wodurch auch das Werkstück 2 und die Schweißbrille 3 um die Drehachse DA mitgedreht werden. Über eine vollständige Umdrehung tastet der Laserstrahl 49 den gesamten, umlaufenden Verbindungsbereich 18 ab und verschweißt diesen.

Während der Laserbearbeitung strömt ein schwacher Gasstrom über den Einlass (Spülgaseinlass) 20 durch den Laserkanal 16 ein, am Werkstück 2 vorbei, und durch den Saugkanal 21 schließlich zur nach wie vor abpumpenden Vakuumpumpe 46. Dadurch können Verschmutzungen am Werkstück 2 und in der Schweißkammer 11 verringert werden, und die Bearbeitungsqualität kann erhöht werden.

Sobald die Laserbearbeitung des Werkstücks 2 abgeschlossen ist, wird der Laserstrahl des Lasers 44 deaktiviert, und die Vakuumpumpe 46 mittels des geschlossenen Absperrventils 47 (vgl. durchgezogene Darstellung) abgetrennt, vgl. **Fig. 4e****.** Durch Öffnen des Entlüftungsventils 48 (vgl. gepunktete Darstellung) wird der Druck in der Schweißkammer 11 dem Umgebungsdruck angeglichen.

Sodann kann durch Absenken der Handhabungsvorrichtung 42 das bearbeitete Werkstück 2 von der Schweißbrille 3 zurückgezogen und auf dem mobilen Tisch 40 abgelegt werden, vgl. **Fig. 4f****.**

Mittels des mobilen Tischs 40 kann anschließend das Werkstück 2 abtransportiert werden, etwa durch Verfahren des mobilen Tischs 40 nach rechts, und ein neues, unbearbeitetes Werkstück kann an die Laserschweißstation 41 herangefahren werden, womit ein neuer Bearbeitungszyklus beginnt (vgl. Fig. 4a und fortfolgende).

### Bezugszeichenliste

- 1: System
- 2: Werkstück
- 2a, 2b: Werkstückteile
- 3: Schweißbrille
- 3a, 3b: Teile der Schweißbrille
- 4: Schweißbrillenaufnahme
- 5: Lager
- 6: Schlitten
- 7: Feder
- 8: Anlageelement
- 9: Lager
- 10: erste umlaufende Dichtung
- 11: Schweißkammer
- 11a: Hauptraum der Schweißkammer
- 12: Widerlager
- 13: zweite umlaufende Dichtung
- 14: dritte umlaufende Dichtung
- 15: Bohrung
- 16: Laserkanal
- 17: Einkoppelfenster
- 17a: Einkoppelfensteraufnahme
- 18: ringförmiger Verbindungsgereich
- 19: Schutzglas
- 20: Einlass
- 21: Saugkanal
- 22: erste stirnseitige Öffnung
- 23: zweite stirnseitige Öffnung
- 24: radiale Wand
- 25: Werkstückträger
- 40: mobiler Tisch
- 41: Laserbearbeitungsstation
- 42: Handhabungsvorrichtung
- 43: Lichtleitfaser
- 43a: Schweißoptik
- 44: Laser
- 45: Verbindungsleitung
- 46: Vakuumpumpe
- 47: Absperrventil
- 48: Entlüftungsventil
- 49: Laserstrahl
- AP: Auftreffpunkt
- DA: Drehachse
- IDM: Innendurchmesser des Hauptraums
- MAB: Mittenabstand

## Patentansprüche

1. Verfahren zum Laserschweißen eines wenigstens zweiteiligen Werkstücks (2), wobei
- das Werkstück (2) oder ein Werkstückträger (25), auf dem das Werkstück (2) angeordnet ist, und eine Schweißbrille (3) relativ aufeinander zu verfahren werden,
- ein ringförmiger Verbindungsbereich (18) zwischen wenigstens zwei Werkstückteilen (2a, 2b) des Werkstücks (2) von einem Laserstrahl (49) geschweißt wird, und
- das Werkstück (2) oder der Werkstückträger (25), auf dem das Werkstück (2) angeordnet ist, und die Schweißbrille (3) relativ voneinander weg verfahren werden,
**dadurch gekennzeichnet,**
**dass** das Verfahren als Vakuum-Laserschweißen des wenigstens zweiteiligen Werkstücks (2) erfolgt, mit folgenden Schritten:
a) das Werkstück (2) oder der Werkstückträger (25), auf dem das Werkstück (2) angeordnet ist, und die Schweißbrille (3) werden relativ aufeinander zu verfahren und aneinander angepresst, so dass von dem Werkstück (2) und/oder dem Werkstückträger (25), der Schweißbrille (3) und einer Schweißbrillenaufnahme (4), in der die Schweißbrille (3) drehbar gelagert ist, eine Schweißkammer (11) umschlossen und gasdicht abgedichtet wird;
b) die Schweißkammer (11) wird evakuiert;
c) der ringförmige Verbindungsbereich (18) zwischen den wenigstens zwei Werkstückteilen (2a, 2b) des Werkstücks (2), der dem Vakuum in der Schweißkammer (11) ausgesetzt ist, wird von dem Laserstrahl (49) geschweißt, wobei der Laserstrahl (49) durch die Schweißkammer (11) propagiert, und wobei das Werkstück (2) oder der Werkstückträger (25) mitsamt dem Werkstück (2) und die Schweißbrille (3) relativ zur Schweißbrillenaufnahme (4) gedreht werden;
d) die Schweißkammer (11) wird belüftet;
e) das Werkstück (2) oder der Werkstückträger (25), auf dem das Werkstück (2) angeordnet ist, und die drehbar gelagerte Schweißbrille (3) werden relativ voneinander weg verfahren.

2. Verfahren nach Anspruch 1, **dadurch gekennzeichnet, dass** an der Schweißbrillenaufnahme (4) ein Einkoppelfenster (17) ausgebildet ist, durch das in Schritt c) der Laserstrahl (49) in die Schweißkammer (11) eingekoppelt wird.

3. Verfahren nach Anspruch 1 oder 2, **dadurch gekennzeichnet, dass** die Schweißbrillenaufnahme (4) während des gesamten Verfahrens ortsfest ist, und in Schritt a) das Werkstück (2) oder der Werkstückträger (25) an die Schweißbrille (3) heran gefahren wird, und in Schritt e) das Werkstück (2) oder der Werkstückträger (25) von der Schweißbrille (3) weg gefahren wird.

4. Verfahren nach Anspruch 3, **dadurch gekennzeichnet, dass** vor Schritt a) das Werkstück (2) oder der Werkstückträger (25) mittels eines mobilen Tischs (40), insbesondere Rundtischs, unter die Schweißbrillenaufnahme (4) verfahren wird, und während Schritt a) das Werkstück (2) oder der Werkstückträger (25) aus dem mobilen Tisch (40) ausgehoben wird, und dass während Schritt e) das Werkstück (2) oder der Werkstückträger (25) auf dem mobilen Tisch (40) abgelegt wird, und nach Schritt e) das Werkstück (2) oder der Werkstückträger (25) mittels des mobilen Tischs (40) von der Schweißbrillenaufnahme (4) weg verfahren wird.

5. Verfahren nach einem der vorhergehenden Ansprüche, **dadurch gekennzeichnet, dass** während Schritt c) an der Schweißkammer (11) ständig gesaugt wird, insbesondere mit einer konstanten Pumpleistung, und ständig Gas in die Schweißkammer (11) eingelassen wird, insbesondere mit einem konstanten Gasstrom.

6. Verfahren nach Anspruch 5, **dadurch gekennzeichnet, dass** in der Schweißbrillenaufnahme (4) ein im Wesentlichen gerader Laserkanal (16) ausgebildet ist, in welchem in Schritt c) der Laserstrahl (49) propagiert und welcher sich auf einen Auftreffpunkt (AP) des Laserstrahls (49) am Verbindungsbereich (18) zu verengt, wobei in Schritt c) in einem vom Verbindungsbereich (18) entfernten Abschnitt des Laserkanals (16) das Gas eingelassen wird,
und dass in der Schweißbrillenaufnahme (4) ein im Wesentlichen gerader Saugkanal (21) ausgebildet ist, welcher zumindest näherungsweise auf den Auftreffpunkt (AP) des Laserstrahls (49) ausgerichtet ist, insbesondere wobei der Saugkanal (21) sich vom Auftreffpunkt (AP) weg erweitert, und wobei in Schritt c) an einem vom Verbindungsbereich (18) abgewandten Ende des Saugkanals (21) abgepumpt wird.

7. System (1) zum Laserschweißen eines wenigstens zweiteiligen Werkstücks (2), umfassend
- das Werkstück (2) oder einen Werkstückträger (25) für das Werkstück (2),
- eine Schweißbrillenaufnahme (4), und
- eine Schweißbrille (3) mit einem Widerlager (12) für das Werkstück (2) und/oder den Werkstückträger (25),
**dadurch gekennzeichnet,**
**dass** die Schweißbrille (3) an der Schweißbrillenaufnahme (4) drehbar um eine Drehachse (DA) gelagert ist,
**dass** eine erste, umlaufende Dichtung (10) an der Schweißbrille (3) oder Schweißbrillenaufnahme (4) angeordnet ist,
und eine zweite, umlaufende Dichtung (13) an der Schweißbrille (3) oder am Werkstückträger (25) angeordnet ist,
so dass bei am Widerlager (12) der Schweißbrille (3) anliegendem Werkstück (2) und/oder Werkstückträger (25) eine gasdichte Schweißkammer (11) ausgebildet ist, die durch die Schweißbrille (3), die Schweißbrillenaufnahme (4) und das Werkstück (2) und/oder den Werkstückträger (25) begrenzt ist,
wobei die erste Dichtung (10) die Schweißbrillenaufnahme (4) gegenüber der Schweißbrille (3) abdichtet, und die zweite Dichtung (13) die Schweißbrille (3) gegenüber dem Werkstück (2) und/oder dem Werkstückträger (25) abdichtet,
und **dass** in der Schweißbrillenaufnahme (4) einen Saugkanal (21) ausgebildet ist, über den die Schweißkammer (11) evakuierbar ist.

8. System (1) nach Anspruch 7, **dadurch gekennzeichnet,**
**dass** weiterhin eine Vakuumpumpe (46) vorhanden ist, welche an den Saugkanal (21) angeschlossen ist.

9. System (1) nach Anspruch 7 oder 8, **dadurch gekennzeichnet, dass** ein Entlüftungsventil (48) vorhanden ist, mit dem die Schweißkammer (11) belüftbar ist, insbesondere wobei das Entlüftungsventil (48) an einer am Saugkanal (21) angeschlossenen Verbindungsleitung (45) zu einer Vakuumpumpe (46) angeordnet ist.

10. System (1) nach einem der Ansprüche 7 bis 9, **dadurch gekennzeichnet, dass** an der Schweißbrillenaufnahme (4) ein entlang der Drehachse (DA) verfahrbarer Schlitten (6) ausgebildet ist, der durch Federkraft in eine von der übrigen Schweißbrillenaufnahme (4) weg verfahrene Position vorgespannt ist,
dass am Schlitten (6) ein Anlageelement (8) zur Anlage am Werkstück (2) angeordnet ist, wobei das Anlageelement (8) drehbar um die Drehachse (DA) am Schlitten (6) gelagert ist,
und dass am Anlageelement (8) eine dritte, umlaufende Dichtung (14) angeordnet ist, mit der bei am Anlageelement (8) anliegendem Werkstück (2) eine Bohrung (15) des Werkstücks (2) abdichtbar ist.

11. System (1) nach einem der Ansprüche 7 bis 10, **dadurch gekennzeichnet, dass** an der Schweißbrillenaufnahme (4) ein Einkoppelfenster (17) für einen Laserstrahl (49) ausgebildet ist, insbesondere an einem äußeren Ende einer Einkoppelfensteraufnahme (17a), die von der übrigen Schweißbrillenaufnahme (4) absteht.

12. System (1) nach einem der Ansprüche 7 bis 11, **dadurch gekennzeichnet, dass** in der Schweißbrillenaufnahme (4) ein im Wesentlichen gerader Laserkanal (16) für die Propagation eines Laserstrahls (49) ausgebildet ist, wobei der Laserkanal (16) sich auf das zu schweißende Werkstück (2) zu verengt, dass an einem dem zu schweißenden Werkstück (2) abgewandten Abschnitt des Laserkanals (16) ein Einlass (20) für ein Gas eingerichtet ist,
dass der Saugkanal (21) zumindest näherungsweise auf einen Auftreffpunkt (AP) des Laserstrahls (49) am zu schweißenden Werkstück (2) ausgerichtet ist, und weiterhin der Laserkanal (16) auf den Auftreffpunkt (AP) des Laserstrahls (49) am zu schweißenden Werkstück (2) ausgerichtet ist,
und dass der Saugkanal (21) im Wesentlichen gerade ausgebildet ist, insbesondere wobei der Saugkanal (21) sich vom zu schweißenden Werkstück (2) weg erweitert.

13. System (1) nach Anspruch 12, **dadurch gekennzeichnet, dass** der Saugkanal (21) und der Laserkanal (16) mit ihren dem Auftreffpunkt (AP) des Laserstrahls (4) zugewandten Enden in einen Hauptraum (11a) der Schweißkammer (11) münden, wobei die Enden einen Mittenabstand (MAB) kleiner oder gleich 2/3 des Innendurchmessers (IDM), bevorzugt kleiner oder gleich 1/2 des Innendurchmessers (IDM), des Hauptraums (11a) aufweisen.

14. System (1) nach einem der Ansprüche 7 bis 13, **dadurch gekennzeichnet, dass** das Volumen der Schweißkammer (11) 5 Liter oder weniger, bevorzugt 3 Liter oder weniger, und insbesondere zwischen 0,2 l und 2,5 l beträgt.

15. System (1) nach einem der Ansprüche 7 bis 14, **dadurch gekennzeichnet, dass** die Schweißbrille (3) mit einer ringförmigen Wand (24) ausgebildet ist, wobei eine erste stirnseitige Öffnung (22) von der Schweißbrillenaufnahme (4) abgedeckt wird, und eine zweite stirnseitige Öffnung (23), die durch das Widerlager (12) begrenzt wird, vom Werkstück (2) und/oder vom Werkstückträger (25) abdeckbar ist.

16. Verwendung eines Systems (1) nach einem der Ansprüche 7 bis 15 in einem Verfahren nach einem der Ansprüche 1 bis 6.

## Claims

1. A method for laser welding of an at least two-part workpiece (2), wherein
- the workpiece (2) or a workpiece carrier (25), on which the workpiece (2) is arranged, and a welding mask (3) are moved relatively toward one another,
- an annular connecting region (18) between at least two workpiece parts (2a, 2b) of the workpiece (2) is welded by a laser beam (49), and
- the workpiece (2) or the workpiece carrier (25) on which the workpiece (2) is arranged and the welding mask (3) are moved relatively away from one another, **characterized in that** the method is performed as vacuum laser welding of the at least two-part workpiece (2)
with the following steps:
a) the workpiece (2) or the workpiece carrier (25), on which the workpiece (2) is arranged, and the welding mask (3) are moved relatively toward one another and pressed against one another, so that a welding chamber (11) is enclosed and sealed in a gastight manner by the workpiece (2) and/or the workpiece carrier (25), the welding mask (3) and a welding mask holder (4), in which the welding mask (3) is rotatably mounted;
b) the welding chamber (11) is evacuated;
c) the annular connecting region (18) between the at least two workpiece parts (2a, 2b) of the workpiece (2) that is exposed to the vacuum in the welding chamber (11) is welded by the laser beam (49), wherein the laser beam (49) propagates through the welding chamber (11), and wherein the workpiece (2) or the workpiece carrier (25) together with the workpiece (2) and the welding mask (3) are turned in relation to the welding mask holder (4);
d) air is admitted to the welding chamber (11);
e) the workpiece (2) or the workpiece carrier (25) on which the workpiece (2) is arranged and the rotatably mounted welding mask (3) are moved relatively away from one another.

2. The method as claimed in claim 1, **characterized in that** on the welding mask holder (4) there is formed an incoupling window (17), through which the laser beam (49) is introduced into the welding chamber (11) in step c).

3. The method as claimed in claim 1 or 2, **characterized in that** the welding mask holder (4) is fixed in place during the entire method, and in step a) the workpiece (2) or the workpiece carrier (25) is moved to the welding mask (3), and in step e) the workpiece (2) or the workpiece carrier (25) is moved away from the welding mask (3).

4. The method as claimed in claim 3, **characterized in that** before step a) the workpiece (2) or the workpiece carrier (25) is moved by means of a mobile table (40), in particular a rotary table, under the welding mask holder (4), and during step a) the workpiece (2) or the workpiece carrier (25) is lifted out of the mobile table (40), and **in that** during step e) the workpiece (2) or the workpiece carrier (25) is placed on the mobile table (40), and after step e) the workpiece (2) or the workpiece carrier (25) is moved by means of the mobile table (40) away from the welding mask holder (4).

5. The method as claimed in one of the preceding claims, **characterized in that** during step c) suction is continuously applied to the welding chamber (11), in particular with a constant pumping power, and gas is continuously admitted to the welding chamber (11), in particular with a constant gas stream.

6. The method as claimed in claim 5, **characterized in that** in the welding mask holder (4) there is formed a substantially straight laser channel (16), in which the laser beam (49) propagates in step c) and which narrows toward a point of impingement (AP) of the laser beam (49) at the connecting region (18), wherein in step c) the gas is let in at a portion of the laser channel (16) that is away from the connecting region (18),
and **in that** in the welding mask holder (4) there is formed a substantially straight suction channel (21), which is at least approximately aligned with the point of impingement (AP) of the laser beam (49), in particular wherein the suction channel (21) widens away from the point of impingement (AP), and wherein in step c) pumping out takes place at an end of the suction channel (21) that is remote from the connecting region (18).

7. A system (1) for the laser welding of an at least two-part workpiece (2), comprising
- the workpiece (2) or a workpiece carrier (25) for the workpiece (2),
- a welding mask holder (4), and
- a welding mask (3) with an abutment (12) for the workpiece (2) and/or the workpiece carrier (25),
**characterized**
**in that** the welding mask (3) is mounted on the welding mask holder (4) rotatably about an axis of rotation (DA),
**in that** a first, peripheral seal (10) is arranged on the welding mask (3) or welding mask holder (4), and a second, peripheral seal (13) is arranged on the welding mask (3) or on the workpiece carrier (25), so that when there is a workpiece (2) and/or a workpiece carrier (25) lying against the abutment (12) of the welding mask (3), there is formed a gastight welding chamber (11), which is bounded by the welding mask (3), the welding mask holder (4) and the workpiece (2) and/or the workpiece carrier (25), wherein the first seal (10) seals the welding mask holder (4) with respect to the welding mask (3), and the second seal (13) seals the welding mask (3) with respect to the workpiece (2) and/or the workpiece carrier (25),
and **in that** in the welding mask holder (4) there is formed a suction channel (21), by way of which the welding chamber (11) can be evacuated.

8. The system (1) as claimed in claim 7, **characterized in that** there is also a vacuum pump (46), which is connected to the suction channel (21).

9. The system (1) as claimed in claim 7 or 8, **characterized in that** there is a venting valve (48), with which air can be admitted to the welding chamber (11), in particular wherein the venting valve (48) is arranged at a connecting line (45) to a vacuum pump (46) that is connected to the suction channel (21) .

10. The system (1) as claimed in one of claims 7 to 9, **characterized in that** on the welding mask holder (4) there is formed a slide (6) which can move along the axis of rotation (DA) and which is pretensioned by a spring force into a position moved away from the rest of the welding mask holder (4),
**in that** arranged on the slide (6) is an abutting element (8) for abutting the workpiece (2), wherein the abutting element (8) is mounted on the slide (6) rotatably about the axis of rotation (DA),
and **in that** arranged on the abutting element (8) is a third, peripheral seal (14), with which a bore (15) in the workpiece (2) can be sealed when the workpiece (2) is lying against the abutting element (8).

11. The system (1) as claimed in one of claims 7 to 10, **characterized in that** an incoupling window (17) for a laser beam (49) is formed on the welding mask holder (4), in particular at an outer end of an incoupling window holder (17a) that protrudes from the rest of the welding mask holder (4).

12. The system (1) as claimed in one of claims 7 to 11, **characterized in that** a substantially straight laser channel (16) for the propagation of a laser beam (49) is formed in the welding mask holder (4), wherein the laser channel (16) narrows toward the workpiece (2) to be welded, **in that** an inlet (20) for a gas is set up at a portion of the laser channel (16) that is remote from the workpiece (2) to be welded,
**in that** the suction channel (21) is at least approximately aligned with a point of impingement (AP) of the laser beam (49) on the workpiece (2) to be welded, and furthermore the laser channel (16) is aligned with the point of impingement (AP) of the laser beam (49) on the workpiece (2) to be welded,
and **in that** the suction channel (21) is formed as substantially straight, in particular wherein the suction channel (21) widens away from the workpiece (2) to be welded.

13. The system (1) as claimed in claim 12, **characterized in that** the suction channel (21) and the laser channel (16) open out with their ends that are facing the point of impingement (AP) of the laser beam (4) into a main space (11a) of the welding chamber (11), wherein the ends have a center-to-center distance (MAB) less than or equal to 2/3 of the inside diameter (IDM), preferably less than or equal to 1/2 of the inside diameter (IDM), of the main space (11a).

14. The system (1) as claimed in one of claims 7 to 13, **characterized in that** the volume of the welding chamber (11) is 5 liters or less, preferably 3 liters or less, and in particular between 0.2 1 and 2.5 1.

15. The system (1) as claimed in one of claims 7 to 14, **characterized in that** the welding mask (3) is formed with an annular wall (24), wherein a first end-face opening (22) is covered by the welding mask holder (4), and a second end-face opening (23), which is bounded by the abutment (12), can be covered by the workpiece (2) and/or by the workpiece carrier (25).

16. The use of a system (1) as claimed in one of claims 7 to 15 in a method as claimed in one of claims 1 to 6.

## Revendications

1. Procédé de soudage au laser d'une pièce (2) constituée d'au moins deux parties, sachant que
- ladite pièce (2) ou un porte-pièces (25) sur lequel ladite pièce (2) est disposée, et une lunette de soudage (3), sont animés de mouvements relatifs de rapprochement mutuel,
- une zone annulaire de liaison (18), entre au moins deux parties (2a, 2b) de ladite pièce (2), est soudée par un faisceau laser (49), et
- ladite pièce (2) ou ledit porte-pièces (25) sur lequel ladite pièce (2) est disposée, et ladite lunette de soudage (3), sont animés de mouvements relatifs d'éloignement mutuel, **caractérisé par le fait**
**que** ledit procédé s'opère en tant que soudage au laser sous vide de la pièce (2) constituée d'au moins deux parties, incluant les étapes suivantes :
a) la pièce (2) ou le porte-pièces (25) sur lequel ladite pièce (2) est disposée, et la lunette de soudage (3), sont animés de mouvements relatifs de rapprochement mutuel et sont pressés les uns contre les autres de telle sorte qu'une chambre de soudage (11) soit circonscrite, avec étanchéité aux gaz, par ladite pièce (2) et/ou ledit porte-pièces (25), ladite lunette de soudage (3) et un logement (4) dans lequel ladite lunette de soudage (3) est montée à rotation ;
b) un vide est créé dans ladite chambre de soudage (11) ;
c) la zone annulaire de liaison (18) entre les deux parties (2a, 2b) à présence minimale de ladite pièce (2), qui est exposée au vide régnant dans ladite chambre de soudage (11), est soudée par le faisceau laser (49), lequel faisceau laser (49) se propage dans ladite chambre de soudage (11), ladite pièce (2) ou ledit porte-pièces (25) conjointement à ladite pièce (2), et ladite lunette de soudage (3), étant animés d'une rotation par rapport audit logement (4) de ladite lunette de soudage ;
d) ladite chambre de soudage (11) est ventilée ;
e) ladite pièce (2) ou ledit porte-pièces (25) sur lequel ladite pièce (2) est disposée, et ladite lunette de soudage (3) montée à rotation, sont animés de mouvements relatifs d'éloignement mutuel.

2. Procédé selon la revendication 1, **caractérisé par le fait qu'**une fenêtre d'introduction (17), par l'intermédiaire de laquelle le faisceau laser (49) est introduit dans la chambre de soudage (11) à l'étape c), est ménagée au niveau du logement (4) de la lunette de soudage.

3. Procédé selon la revendication 1 ou 2, **caractérisé par le fait que** le logement (4) de la lunette de soudage occupe une position fixe pendant toute la durée dudit procédé, la pièce (2) ou le porte-pièces (25) étant présenté(e) à la lunette de soudage (3) à l'étape a), et ladite pièce (2) ou ledit porte-pièces (25) étant éloigné(e) de ladite lunette de soudage (3) à l'étape e).

4. Procédé selon la revendication 3, **caractérisé par le fait que**, préalablement à l'étape a), la pièce (2) ou le porte-pièces (25) est déplacé(e) au-dessous du logement (4) de la lunette de soudage au moyen d'un plateau mobile (40), notamment d'un plateau circulaire, ladite pièce (2) ou ledit porte-pièces (25) étant soulevé(e) à l'écart dudit plateau mobile (40) au cours de l'étape a) ;
et **par le fait que** ladite pièce (2) ou ledit porte-pièces (25) est déposé(e) sur ledit plateau mobile (40) au cours de l'étape e) et, à l'issue de ladite étape e), ladite pièce (2) ou ledit porte-pièces (25) est éloigné(e) dudit logement (4) de la lunette de soudage, au moyen dudit plateau mobile (40).

5. Procédé selon l'une des revendications précédentes, **caractérisé par le fait que**, durant l'étape c), une aspiration s'opère en permanence au niveau de la chambre de soudage (11), notamment avec une puissance de pompage constante, et du gaz est admis en permanence dans ladite chambre de soudage (11), en particulier avec un courant de gaz constant.

6. Procédé selon la revendication 5, **caractérisé par le fait qu'**un canal (16) guide-laser substantiellement rectiligne, dans lequel le faisceau laser (49) se propage à l'étape c), est ménagé dans le logement (4) de la lunette de soudage, lequel canal se rétrécit en direction d'un point d'impact (AP) dudit faisceau laser (49) sur la zone de liaison (18), sachant que le gaz est admis, lors de ladite étape c), dans un tronçon dudit canal (16) guide-laser situé à distance de ladite zone de liaison (18) ;
et **par le fait qu'**un canal d'aspiration (21) substantiellement rectiligne, ménagé dans ledit logement (4) de la lunette de soudage, est orienté au moins approximativement vers ledit point d'impact (AP) dudit faisceau laser (49), sachant notamment que ledit canal d'aspiration (21) s'élargit en s'éloignant dudit point d'impact (AP) et sachant qu'un pompage d'évacuation s'opère, lors de ladite étape c), au niveau d'une extrémité dudit canal d'aspiration (21) qui est tournée à l'opposé de ladite zone de liaison (18).

7. Système (1) dévolu au soudage au laser d'une pièce (2) constituée d'au moins deux parties, comprenant
- ladite pièce (2), ou un porte-pièces (25) dédié à ladite pièce (2),
- un logement (4) de lunette de soudage, et
- une lunette de soudage (3), munie d'une contre-butée (12) affectée à ladite pièce (2) et/ou audit porte-pièces (25),
**caractérisé par le fait**
**que** la lunette de soudage (3) est montée tournante autour d'un axe de rotation (DA), au niveau du logement (4) de ladite lunette de soudage ;
par le fait qu'une première garniture périphérique d'étanchement (10) est implantée sur la lunette de soudage (3), ou sur le logement (4) de ladite lunette de soudage,
et **qu'**une deuxième garniture périphérique d'étanchement (13) est implantée sur ladite lunette de soudage (3), ou sur le porte-pièces (25),
donnant ainsi naissance, lorsque la pièce (2) et/ou le porte-pièces (25) est (sont) en applique sur la contre-butée (12) de la lunette de soudage (3), à une chambre de soudage (11) étanche aux gaz et délimitée par ladite lunette de soudage (3), par le logement (4) de ladite lunette de soudage, et par ladite pièce (2) et/ou ledit porte-pièces (25),
sachant que la première garniture d'étanchement (10) assure l'étanchéité du logement (4) de la lunette de soudage par rapport à ladite lunette de soudage (3), et que la deuxième garniture d'étanchement (13) assure l'étanchéité de ladite lunette de soudage (3) par rapport à la pièce (2) et/ou au porte-pièces (25) ;
et par le fait qu'un canal d'aspiration (21), par l'intermédiaire duquel un vide peut être créé dans la chambre de soudage (11), est ménagé dans ledit logement (4) de la lunette de soudage.

8. Système (1) selon la revendication 7, **caractérisé, en outre, par** la présence d'une pompe à vide (46) raccordée au canal d'aspiration (21).

9. Système (1) selon la revendication 7 ou 8, **caractérisé par** la présence d'une vanne de ventilation (48) à l'aide de laquelle la chambre de soudage (11) peut être ventilée, sachant notamment que ladite vanne de ventilation (48) est disposée au niveau d'un conduit de jonction (45) gagnant une pompe à vide (46) et raccordé au canal d'aspiration (21).

10. Système (1) selon l'une des revendications 7 à 9, **caractérisé par le fait qu'**un chariot (6), déplaçable le long de l'axe de rotation (DA) et ménagé au niveau du logement (4) de la lunette de soudage, est précontraint, par une force élastique, vers un emplacement situé à l'écart du reste dudit logement (4) de la lunette de soudage ;
**par le fait qu'**un élément de contact (8), conçu pour venir en applique contre la pièce (2), est disposé sur le chariot (6), lequel élément de contact (8) est monté tournant sur ledit chariot (6), autour dudit axe de rotation (DA) ;
et **par le fait qu'**une troisième garniture périphérique d'étanchement (14), implantée sur l'élément de contact (8), permet d'assurer l'étanchéité d'un alésage (15) de la pièce (2) lorsque ladite pièce (2) est en applique contre ledit élément de contact (8).

11. Système (1) selon l'une des revendications 7 à 10, **caractérisé par le fait qu'**une fenêtre d'introduction (17), affectée à un faisceau laser (49), est ménagée au niveau du logement (4) de la lunette de soudage, notamment au niveau d'une extrémité extérieure d'un logement (17a) dédié à ladite fenêtre d'introduction et faisant saillie au-delà du reste dudit logement (4) de la lunette de soudage.

12. Système (1) selon l'une des revendications 7 à 11, **caractérisé par le fait qu'**un canal (16) guide-laser, substantiellement rectiligne, est ménagé dans le logement (4) de la lunette de soudage en vue de la propagation d'un faisceau laser (49), ledit canal (16) guide-laser se rétrécissant en direction de la pièce (2) à souder ;
**par le fait qu'**une admission (20), destinée à un gaz, est agencée au niveau d'un tronçon dudit canal (16) guide-laser tourné à l'opposé de ladite pièce (2) à souder ;
**par le fait que** le canal d'aspiration (21) est orienté, au moins approximativement, vers un point d'impact (AP) du faisceau laser (49) sur la pièce (2) à souder, le canal (16) guide-laser étant orienté, par ailleurs, vers ledit point d'impact (AP) dudit faisceau laser (49) sur ladite pièce (2) à souder ;
et **par le fait que** le canal d'aspiration (21) est de réalisation pour l'essentiel rectiligne, sachant notamment que ledit canal d'aspiration (21) s'élargit en s'éloignant de ladite pièce (2) à souder.

13. Système (1) selon la revendication 12, **caractérisé par le fait que** le canal d'aspiration (21) et le canal (16) guide-laser débouchent, par leurs extrémités tournées vers le point d'impact (AP) du faisceau laser (49), dans un espace principal (11a) de la chambre de soudage (11), lesdites extrémités présentant une distance entre axes (MAB) inférieure ou égale aux 2/3 du diamètre intérieur (IDM), de préférence inférieure ou égale à 1/2 du diamètre intérieur (IDM) dudit espace principal (11a).

14. Système (1) selon l'une des revendications 7 à 13, **caractérisé par le fait que** le volume de la chambre de soudage (11) mesure 5 litres ou moins, de préférence 3 litres ou moins, et notamment entre 0,21 et 2,51.

15. Système (1) selon l'une des revendications 7 à 14, **caractérisé par le fait que** la lunette de soudage (3) est pourvue d'une paroi annulaire (24), un premier orifice frontal (22) étant occulté par le logement (4) de ladite lunette de soudage et un second orifice frontal (23), délimité par la contre-butée (12), pouvant être occulté par la pièce (2) et/ou par le porte-pièces (25).

16. Utilisation d'un système (1) conforme à l'une des revendications 7 à 15, dans un procédé conforme à l'une des revendications 1 à 6.
